# EUROPÄISCHE PATENTSCHRIFT

(11) **EP 3 565 979 B1**
(45) Veröffentlichungstag und Bekanntmachung des Hinweises auf die Patenterteilung: **11.08.2021**
(21) Anmeldenummer: 18708901.6
(22) Anmeldetag: 14.02.2018
(51) Int. Cl.: F16B 37/04

(54) **BEFESTIGUNGSANORDNUNG UND EIN ENTSPRECHENDES SCHALTSCHRANKGEHÄUSE**
FASTENING ASSEMBLY AND A CORRESPONDING SWITCH CABINET HOUSING
SYSTÈME DE FIXATION ET BOÎTIER D'ARMOIRE DE COMMANDE CORRESPONDANT

(30) Priorität: 19.04.2017 DE 102017108335
(43) Veröffentlichungstag der Anmeldung: 13.11.2019
(73) Patentinhaber: Rittal GmbH & Co. KG, 35745 Herborn (DE)
(72) Erfinder: BRÜCK, Daniel, 35764 Sinn (DE)
(74) Vertreter: Angerhausen, Christoph
(86) Internationale Anmeldenummer: PCT/DE2018/100134
(87) Internationale Veröffentlichungsnummer: WO 2018/192605

(56) Entgegenhaltungen:
- EP-A1- 2 848 827
- DE-A1- 19 860 434
- DE-C1- 19 937 892

## Beschreibung

Die Erfindung geht aus von einer Befestigungsanordnung gemäß dem Oberbegriff des Patentanspruchs 1.

Eine Befestigungsanordnung mit einer Profilstrebe und einer in einem Durchbruch der Profilstrebe montierten Einsteckmutter, wobei die Einsteckmutter eine an einer Spange gehaltene Gewindemutter aufweist, ist aus der DE 199 37 892 C1 bekannt. Eine ähnliche Befestigungsanordnung beschreibt auch die DE 198 60 434 A1.

Die EP 2 848 827 A1 zeigt eine Klemme.

Die aus dem Stand der Technik bekannten Befestigungsanordnungen haben den Nachteil, dass es insbesondere beim Einschrauben eines Bolzens in die Gewindemutter der Einsteckmutter passieren kann, dass sich die Einsteckmutter in dem Durchbruch der Profilstrebe verdreht und daraufhin entweder das Einschrauben des Bolzens in die Einsteckmutter unmöglich ist, oder sich der Bolzen in der Gewindemutter der Einsteckmutter verkantet.

Es ist daher die Aufgabe der Erfindung, eine Befestigungsanordnung der eingangs beschriebenen Art derart weiterzuentwickeln, dass sie sicher in dem Durchbruch der Profilstrebe gelagert ist und damit ein versehentliches Verdrehen der Einsteckmutter in dem Durchbruch unterbunden wird.

Diese Aufgabe wird durch eine Befestigungsanordnung mit den Merkmalen des Anspruchs 1 gelöst. Der nebengeordnete Anspruch 14 betrifft ein entsprechendes Schaltschrankgehäuse. Vorteilhafte Ausführungsformen sind Gegenstand der abhängigen Ansprüche.

Demgemäß ist bei einer Befestigungsanordnung der eingangs beschriebenen Art vorgesehen, dass mindestens eines von Oberteil und Unterteil an seiner Außenseite eine vorstehende Kontaktkralle, insbesondere für den Potentialausgleich der Einsteckmutter mit der Profilstrebe, aufweist.

Dadurch, dass die Einsteckmutter über die in die Aufnahme der Spange eingreifende Kante des Durchbruchs mit der Profilstrebe gekoppelt ist, wird ein versehentliches Verdrehen der Einsteckmutter wirkungsvoll vermieden.

Die Aufnahme kann im Wesentlichen U-förmig und an das erste oder das zweite Betätigungsende angeformt sein.

Die Aufnahme kann zwischen dem ersten oder dem zweiten Betätigungsende und der Gewindemutter angeordnet sein.

Weiterhin kann die Spange ein Blechformteil und die Aufnahme eine U-förmige Blechumkantung sein. Bis auf die Gewindemutter kann die Einsteckmutter ein durch Stanzen und Kanten erhältliches Blechformteil sein.

Die Aufnahme kann unter einem Abstand zueinander angeordnete Begrenzungswände aufweisen, von denen eine erste Begrenzungswand in der Verriegelungsposition einer Innenseite der Kante des Durchbruchs vorgelagert ist, und von denen eine zweite Begrenzungswand in der Verriegelungsposition einer der Innenseite gegenüber liegenden Außenseite der Kante des Durchbruchs vorgelagert ist. Die Kante des Durchbruchs kann somit zwischen den Begrenzungswänden der Aufnahme eingeschlossen sein, wodurch ein versehentliches Verdrehen der Einsteckmutter in dem Durchbruch wirkungsvoll unterbunden wird.

Mindestens eines der Betätigungsenden kann in einem Abschnitt, mit dem das Betätigungsende durch den Durchbruch hindurchtritt, eine Abmessung in Längsrichtung der in der Aufnahme aufgenommenen Kante aufweisen, die im Wesentlichen einer Länge der Kante in der Längsrichtung entspricht. Auch diese Maßnahme trägt dazu bei, die Einsteckmutter noch weiter in dem Durchbruch festzulegen und damit gegenüber versehentlichem Verdrehen zu sichern.

In einer Freigabeposition der Betätigungsenden zueinander, in der die Betätigungsenden gegenüber der Verriegelungsposition zueinander verlagert sind, kann die Kante des Durchbruchs mit der Aufnahme der Spange außer Eingriff stehen. Das Verlagern der Betätigungsenden von der Verriegelungsposition in die Freigabeposition kann insbesondere manuell erfolgen, wobei die Betätigungsenden auf die Art der Betätigung der Einsteckmutter abgestimmt sein können, insbesondere danach, ob eine werkzeuglose Betätigung der Einsteckmutter vorgenommen sein soll, oder ob die Verlagerung der Betätigungsenden zwischen der Freigabeposition und der Verriegelungsposition mit Hilfe eines Werkzeugs erfolgen soll.

So kann es vorgesehen sein, dass die Betätigungsenden jeweils ein Griffstück aufweisen, wobei die Griffstücke unter einem Abstand zueinander durch den Durchbruch über eine Außenseite der Profilstrebe hervorstehen und entgegen einer mechanischen Vorspannung der Spange von der Verriegelungsposition in eine Freigabeposition überführt werden können.

Insbesondere die Spange kann ein Blechformteil sein, welches in einer relaxierten Stellung in der Verriegelungsposition angeordnet ist, so dass ein Überführen der Einsteckmutter in die Freigabeposition mit einer manuellen oder werkzeuggebundenen Vorspannung der Spange, insbesondere mit einem Zusammendrücken der Spange, verbunden sein kann.

Wenn die Betätigungsenden Griffstücke aufweisen, so kann insbesondere vorgesehen sein, dass die Einsteckmutter in die Freigabeposition überführt wird, indem die Spange durch Zusammendrücken der Griffstücke, das heißt Annähern der Griffstücke aneinander, vorgespannt wird, so dass die Kante des Durchbruchs mit der Aufnahme der Spange außer Eingriff gebracht wird.

Es kann auch vorgesehen sein, dass die Betätigungsenden überlappend einer den Durchbruch aufweisenden Profilseite der Profilstrebe vorgelagert sind und fluchtende Werkzeugdurchlässe aufweisen.

Die fluchtenden Werkzeugdurchlässe können eine Werkzeugeinstecköffnung bilden, die von einer ersten Begrenzungskante eines ersten Werkzeugdurchlasses der Werkzeugdurchlässe und gegenüberliegend von einer zweiten Begrenzungskante eines zweiten Werkzeugdurchlasses der Werkzeugdurchlässe abgegrenzt ist.

Dabei kann zumindest einer der fluchtenden Werkzeugdurchlässe an einer dritten Begrenzungskante, die sich in Richtung einer Verstellrichtung zwischen der Verriegelungsposition und der Freigabeposition der Betätigungsenden erstreckt, eine Zahnung eines Zahnstangenantriebs aufweisen.

Eine der dritten Begrenzungskante gegenüberliegende vierte Begrenzungskante kann unter einem Abstand zu der dritten Begrenzungskante angeordnet sein und ein Gegenlager für einen Zahnantrieb, insbesondere für einen Schraubendreher mit Vielrundformantrieb, auch bekannt unter der Bezeichnung "Torx", bilden.

Der andere Werkzeugdurchlass, der fluchtenden Werkzeugdurchlässe kann kreisrund ausgeführt sein und einen Innendurchmesser aufweisen, der im Wesentlichen einem Außendurchmesser eines Zahnantriebs, insbesondere eines Vielrundformantriebs eines Schraubendrehers entspricht.

Gemäß einem anderen Aspekt wird ein Schaltschrankgehäuse mit einer Befestigungsanordnung der zuvor genannten Art beschrieben, wobei die Profilstrebe entweder eine Profilstrebe eines Rahmengestells des Schaltschrankgehäuses oder eine Ausbaukomponente für den Innenausbau des Schaltschrankgehäuses ist, insbesondere ein Montagechassis.

Weitere Einzelheiten der Erfindung werden anhand der nachstehenden Figuren erläutert. Dabei zeigt:
- Figur 1: drei Ausführungsformen einer erfindungsgemäßen Einsteckmutter;
- Figur 2: eine Befestigungsanordnung unter Verwendung der in Figur 1 gezeigten Ausführungsformen erfindungsgemäßer Einsteckmuttern,
- Figur 3: eine Querschnittsansicht einer Ausführungsform einer Einsteckmutter;
- Figur 4: eine weitere Ausführungsform einer Einsteckmutter in perspektivischer Darstellung;
- Figur 5: noch eine weitere Ausführungsform einer erfindungsgemäßen Einsteckmutter in perspektivischer Darstellung;
- Figur 6: noch eine weitere Ausführungsform einer erfindungsgemäßen Einsteckmutter in perspektivischer Darstellung;
- Figur 7: eine weitere Ausführungsform einer erfindungsgemäßen Befestigungsanordnung; und
- Figur 8: eine Querschnittsansicht der Ausführungsform gemäß Figur 6 senkrecht zur Längsrichtung der Profilstrebe.

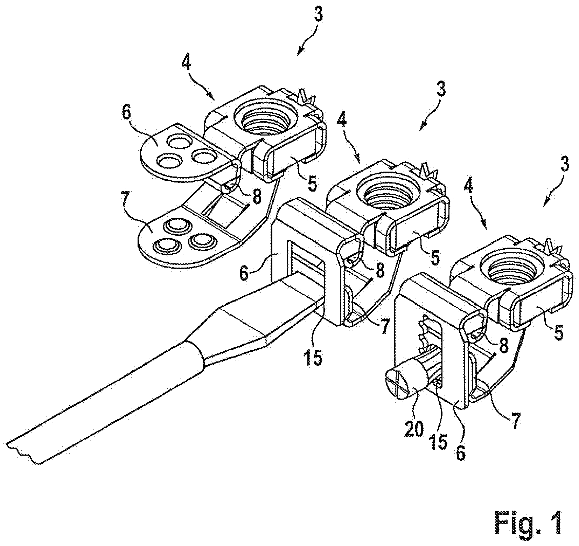

Die Figur 1 zeigt drei mögliche Ausführungsformen erfindungsgemäßer Einsteckmuttern 3, wobei diese sich insbesondere in der Art der Ausbildung der beiden Betätigungsenden 6, 7 unterscheiden. Sämtlichen der gezeigten Ausführungsformen gemeinsam ist, dass diese bis auf die Gewindemutter 5 als ein Blechformteil ausgebildet sind, welches durch Stanzen und Kanten erhältlich ist. Dadurch sind die in Figur 1 gezeigten Einsteckmuttern 3 kostengünstig in der Herstellung. Ebenso zeigen sämtliche der in Figur 1 gezeigten Ausführungsformen die für die Erfindung wesentliche Aufnahme 8, welche dazu vorgesehen ist, eine Kante eines Durchbruchs aufzunehmen, in welchen die jeweilige Einsteckmutter 3 eingesetzt ist.

Die in der Darstellung gemäß Figur 1 am weitesten links gezeigte Einsteckmutter 3 weist Betätigungsenden 6, 7 auf, die für die manuelle Betätigung der Einsteckmutter 3 ausgelegt sind. Sämtliche Einsteckmuttern 3 gemäß Figur 1 sind in ihrer relaxierten Stellung gezeigt, bei der die Spange 4 der Einsteckmuttern 3 keine Vorspannung aufweist. In diesem Zustand befindet sich die Einsteckmutter 3 in ihrer Verriegelungsposition. Durch Zusammendrücken der beiden Betätigungsenden 6, 7 der in der Darstellung gemäß Figur 1 links dargestellten Ausführungsform wird die Spange 4 vorgespannt und dementsprechend die Einsteckmutter 3 aus der gezeigten Verriegelungsposition in eine Freigabeposition überführt, bei der eine in der Aufnahme 8 aufgenommene Kante eines Durchbruchs einer Profilstrebe aus der Aufnahme heraustritt und somit die Einsteckmutter 3 über die Betätigungsenden 6, 7 aus dem Durchbruch herausgenommen werden kann.

Für die zuvor beschriebene Verlagerung der Betätigungsenden 6, 7 zueinander, um die Einsteckmutter 3 zwischen der gezeigten Verriegelungsposition in eine Freigabeposition zu überführen und dazu insbesondere die Spange 4 vorzuspannen, ist bei der in Figur 1 mittleren Einsteckmutter 3 vorgesehen, dass die Betätigungsenden 6, 7 überlappend angeordnet sind und in einem Überlappungsbereich eine Werkzeugeinstecköffnung 15 bilden, in die ein Werkzeug, vorliegend ein Schlitzschraubendreher 27, eingesetzt werden kann. Es ist leicht nachvollziehbar, dass durch Verdrehen oder Verschwenken des Schlitzschraubendrehers 27 um bis zu 90° aus der in Figur 1 gezeigten Stellposition die Betätigungsenden 6, 7 derart zueinander verlagert werden können, dass die Spange 4 der Einsteckmutter 3 vorgespannt wird und somit eine eventuell in der Aufnahme 8 aufgenommene Kante mit der Aufnahme 8 außer Eingriff treten kann.

In Abwandlung zu der zuvor beschriebenen Ausführungsform weist die in Figur 1 unten rechts dargestellte dritte Ausführungsform einer erfindungsgemäßen Einsteckmutter 3 an ihren Betätigungsenden 6, 7 einen Zahnstangenantrieb auf, der beispielsweise über einen handelsüblichen Torx-Schraubendreher betätigt werden kann, um die Betätigungsenden 6, 7 gegeneinander vorzuspannen. Die zuvor beschriebenen drei Ausführungsformen werden nachstehend noch weiter im Detail beschrieben.

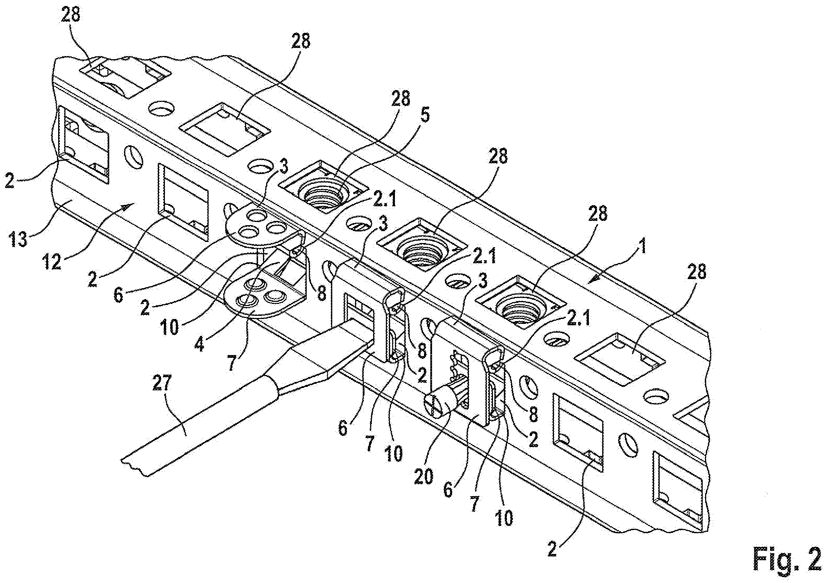

Die Figur 2 zeigt die aus Figur 1 bekannten drei Ausführungsformen für eine erfindungsgemäße Einsteckmutter 3 in einem montierten Zustand, dass heißt, in einem Zustand, in dem sie über jeweils einen Durchbruch 2 einer Profilstrebe 1 in die Profilstrebe 1 eingesetzt sind, wobei die jeweilige Einsteckmutter 3 lediglich über ihre Betätigungsenden 6, 7 über die den Durchbruch 2 aufweisende Profilseite 13 der Profilstrebe 1 herausragt. An einer senkrecht zu der Profilseite 13 angeordneten weiteren Profilseite weist die Profilstrebe 1 weitere Durchbrüche 28 auf, mit denen jeweils die Gewindemutter 5 der Einsteckmutter 3 fluchtet und damit für die Montage beispielsweise einer Schaltanlagenkomponente für den Innenausbau eines Schaltschrankgehäuses, an der Profilstrebe 1 zugänglich wird.

Die Figur 2 zeigt weiterhin, dass in der gezeigten Verriegelungsposition der Betätigungsenden 6, 7 eine Kante 2.1 des jeweiligen Durchbruchs 2 in der Aufnahme 8 der Einsteckmutter 3 aufgenommen ist, so dass die Einsteckmutter 3 sowohl gegenüber einer Verlagerung in Einsteckrichtung als auch gegenüber einer Verlagerung um die Einsteckrichtung herum festgelegt und damit verdrehsicher in dem Durchbruch 2 aufgenommen ist. In einem sich an die Betätigungsenden 6, 7 anschließenden Bereich 10 der Spange 4 der Einsteckmutter 3 weist die Einsteckmutter 3 eine Abmessung auf, die gerade einer Abmessung einer Kante 2.1 in ihrer Längsrichtung entspricht, so dass über den erzeugten Formschluss in dem Bereich 10 der Einsteckmutter 3 eine weitere Sicherung der Einsteckmutter 3 in dem Durchbruch 2 erreicht wird.

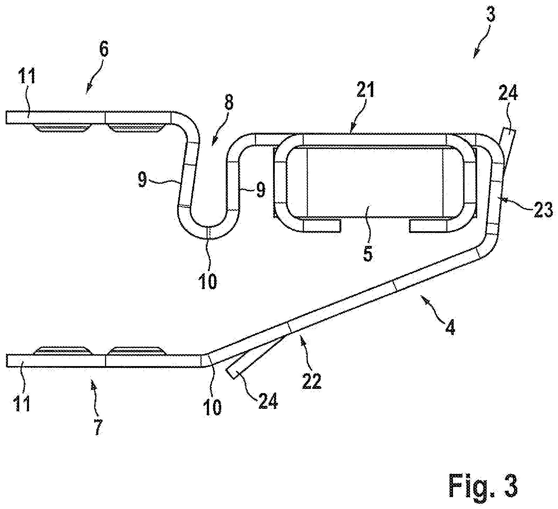

Die Figur 3 zeigt eine Ausführungsform einer Einsteckmutter 3 im Querschnitt. Die gezeigte Querschnittsansicht macht insbesondere eine mögliche geometrische Ausgestaltung der Aufnahme 8 deutlich. Demgemäß ist die Aufnahme 8 im Wesentlichen U-förmig ausgebildet und kann insbesondere als eine Blechumkantung ausgebildet sein. Wie gezeigt ist, erstrecken sich die gegenüberliegenden Begrenzungswände 9 der Aufnahme 8 unter einem spitzen Winkel zueinander, so dass die Umkantung, über welche die Begrenzungswände 9 zur Ausbildung der Aufnahme 8 miteinander verbunden sind, eine (stetige) Umkantung von mehr als 180° ist.

Die Einsteckmutter 3 kann bis auf die Gewindemutter 5 insbesondere als Blechformteil ausgebildet sein und dementsprechend kann auch die Aufnahme 8 eine Blechumkantung sein. Die Einsteckmutter weist weiterhin eine Spange 4 mit einem Oberteil 21 und einem Unterteil 22 auf, die über einen Verbindungsabschnitt 23 miteinander verbunden sind. In einem Übergangsbereich zwischen dem Verbindungsabschnitt 23 und dem Oberteil 21 ist eine Kontaktkralle 24 angeordnet, die dem Potentialausgleich zwischen der Einsteckmutter 3 und einer Profilstrebe dient. Eine weitere Kontaktkralle ist an der Außenseite des Unterteils 24 angeordnet. Die Betätigungsenden 6, 7 weisen jeweils ein Griffstück 11 auf, über welche die Spange 4 der Einsteckmutter 3 mit zwei Fingern zusammengedrückt und damit vorgespannt werden kann, so dass ggf. eine in der Aufnahme 8 aufgenommene Kante eines Durchbruchs einer Profilstrebe aus der Aufnahme 8 heraustreten und damit mit der Aufnahme 8 außer Eingriff treten kann.

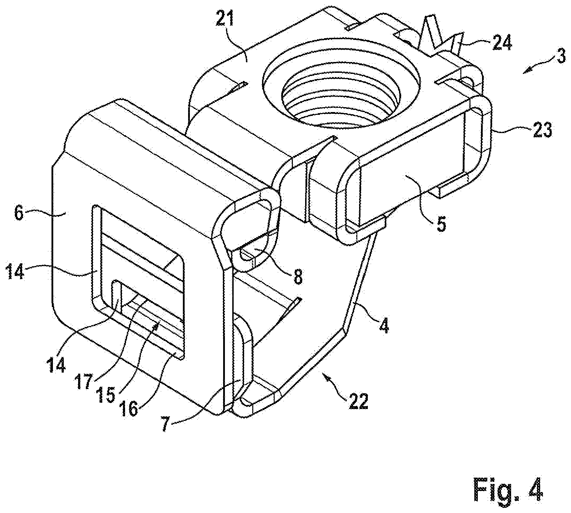

Die Figur 4 zeigt im Detail eine Ausführungsform, bei der die Betätigungsenden 6, 7 überlappend und einer den Durchbruch aufweisenden Profilseite der Profilstrebe vorgelagert sind, sowie fluchtende Werkzeugdurchlässe aufweisen. Die fluchtenden Werkzeugdurchlässe 14 bilden eine Werkzeugeinstecköffnung 15, die von einer ersten Begrenzungskante 16 eines ersten der Werkzeugdurchlässe 14 und gegenüberliegend von einer zweiten Begrenzungswand 17 eines zweiten der Werkzeugdurchlässe 14 abgegrenzt ist. Die Werkzeugeinstecköffnung 15 kann insbesondere dazu dienen, einen Schlitzschraubendreher aufzunehmen, wie es mit Bezug auf die Figuren 1 und 2 gezeigt ist.

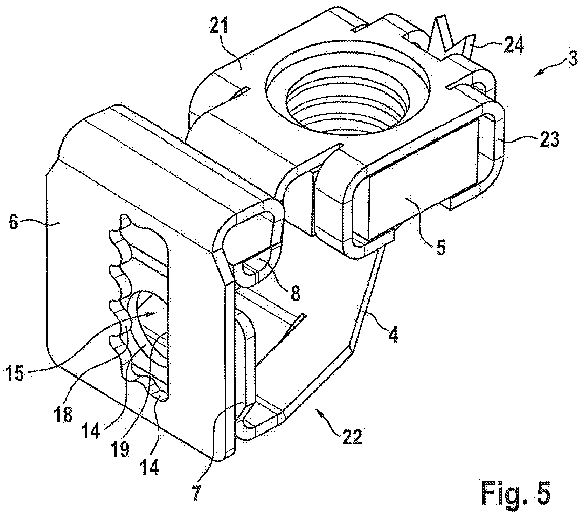

In Abwandlung der in Figur 4 gezeigten Ausführungsform ist bei der in Figur 5 gezeigten Ausführungsform vorgesehen, dass einer der fluchtenden Werkzeugdurchlässe 14 an einer dritten Begrenzungskante 18, die sich in Richtung der Verstellrichtung der Betätigungsenden 6, 7 zwischen der Verriegelungsposition und der Freigabeposition erstreckt, eine Zahnung eines Zahnstangenantriebs aufweist. Die der dritten Begrenzungskante 18 gegenüberliegende vierte Begrenzungswand 19 ist unter einem Abstand zu der dritten Begrenzungskante 18 angeordnet und bildet ein Gegenlager für den Zahnantrieb 20 (siehe Figuren 1 und 2), der, wie bereits mit Bezug auf die Figuren 1 und 2 beschrieben worden ist, beispielsweise ein Schraubendreher mit einem Vielrundformantrieb sein kann, beispielsweise ein Torx-Schraubendreher.

Der Werkzeugdurchlass 14 in dem zweiten Betätigungsende 7 ist kreisrund ausgeführt und weist einen Innendurchmesser auf, der im Wesentlichen einem Außendurchmesser des zuvor beschriebenen Zahnantriebs entsprechen kann und somit ein Drehlager für den Zahnantrieb bildet.

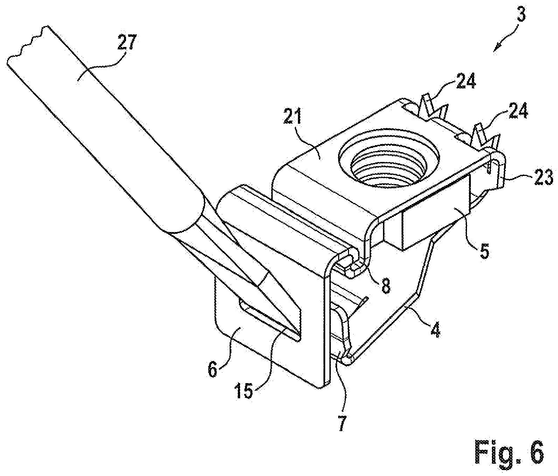

Figur 6 zeigt in Abwandlung der in Figur 4 gezeigten Ausführungsform eine Einsteckmutter 3, bei der die Gewindemutter 5 als eine Einpressmutter ausgebildet ist (wie es grundsätzlich bei allen Ausführungsformen der Fall sein kann), die mit dem Oberteil 21 verpresst ist und bei der sich das erste und das zweite Betätigungsende 6, 7 in der dargestellten zueinander unverspannten Verriegelungsposition der Betätigungsenden unter einem spitzen Winkel zueinander erstrecken, so dass die Betätigungsenden 6, 7 mithilfe eines Schraubendrehers 27 oder dergleichen, der in die Werkzeugeinstecköffnung 15 eingesetzt ist, über eine Schwenkbewegung des Schraubendrehers 27 zueinander verstellt werden können, so dass die Betätigungsenden in eine Freigabeposition überführt werden und dadurch die Einsteckmutter vorgespannt wird.

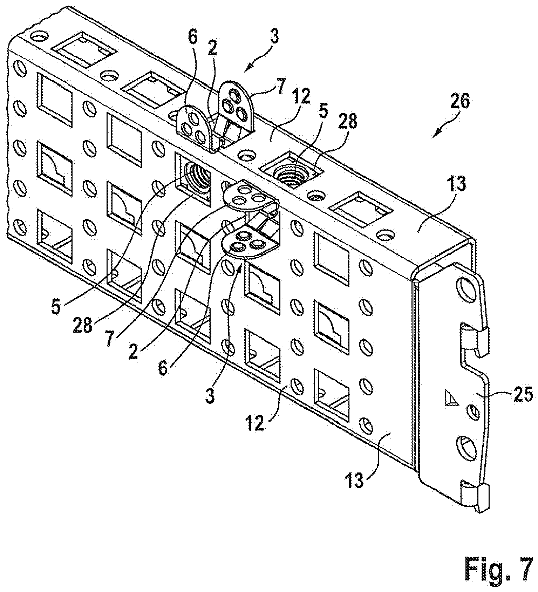

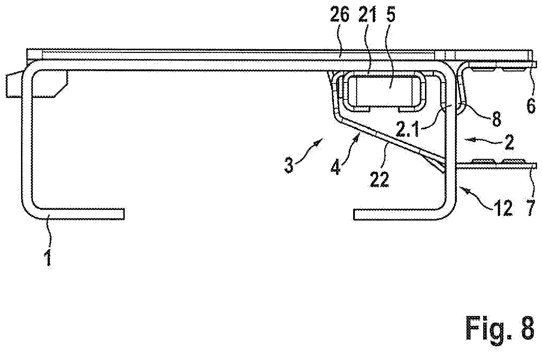

Die Figuren 7 und 8 zeigen eine weitere Ausführungsform einer erfindungsgemäßen Befestigungsanordnung, bei der über zwei senkrecht zueinanderstehende Profilseiten 13 einer Profilstrebe 1 jeweils eine Einsteckmutter 3 über jeweils einen Durchbruch 2 eingesetzt ist, so dass über jeweils einen weiteren Durchbruch 18 in der jeweils anderen Profilseite die Gewindemutter 5 der Einsteckmutter 3 zugänglich wird, etwa, um für den Innenausbau eines Schaltschranks eine Schaltanlagenkomponente an der im vorliegenden Fall als Montagechassis ausgebildeten Ausbaukomponente 26 festzulegen. Das Montagechassis 26 weist an seinen gegenüberliegenden Enden (nur ein Ende ist dargestellt) einen Befestigungsflansch 25 auf, über die das Montagechassis beispielsweise am Rahmengestell eines Schaltschranks festgelegt werden kann.

Die Ausbaukomponente ist auf keine bestimmen Ausführungsformen beschränkt, weist jedoch zweckmäßigerweise mindestens eine Montageebene mit einer Systemlochung aus regelmäßig beabstandeten Durchbrüchen auf, in welchen eine Einsteckmutter 3 montiert werden kann. Weiterhin weist die Ausbaukomponente zweckmäßigerweise eine weitere Montageebene mit einer Systemlochung auf, wobei sich die weitere Montageebene senkrecht zu der erstgenannten Montageebene erstreckt. Die Durchbrüche der weiteren Montageebene sind dazu bereitgestellt, damit über diese die Käfigmutter für die Befestigung von Komponenten zugänglich wird.

### Bezugszeichenliste

- 1: Profilstrebe
- 2: Durchbruch
- 2.1: Kante
- 3: Einsteckmutter
- 4: Spange
- 5: Gewindemutter
- 6: erstes Betätigungsende
- 7: zweites Betätigungsende
- 8: Aufnahme
- 9: Begrenzungswand
- 10: Abschnitt
- 11: Griffstück
- 12: Außenseite
- 13: Profilseite
- 14: Werkzeugdurchlass
- 15: Werkzeugeinstecköffnung
- 16: erste Begrenzungskante
- 17: zweite Begrenzungskante
- 18: dritte Begrenzungskante
- 19: vierte Begrenzungskante
- 20: Zahnantrieb
- 21: Oberteil
- 22: Unterteil
- 23: Verbindungsabschnitt
- 24: Kontaktkralle
- 25: Befestigungsflansch
- 26: Ausbaukompente
- 27: Schlitzschraubendreher
- 28: weiterer Durchbruch

## Patentansprüche

1. Befestigungsanordnung mit einer Profilstrebe (1) und einer in einem Durchbruch (2) der Profilstrebe (1) montierten Einsteckmutter (3), wobei die Einsteckmutter (3) eine an einer Spange (4) gehaltene Gewindemutter (5) aufweist, **dadurch gekennzeichnet, dass** die Spange (4) ein erstes und ein zweites Betätigungsende (6, 7) aufweist, über die die Einsteckmutter (3) aus dem Durchbruch (2) heraus ragt, wobei in einer Verriegelungsposition der Betätigungsenden (6, 7) zueinander eine Kante (2.1) des Durchbruchs (2) in einer Aufnahme (8) der Spange (4) aufgenommen ist, wobei die Befestigungsanordnung ein Oberteil (21) und ein Unterteil (22) aufweist, die über einen Verbindungsabschnitt (23) unter einem Abstand zueinander miteinander verbunden sind, wobei ein erstes der Betätigungsenden (6, 7) ein freies Ende des Oberteils (21) und ein zweites der Betätigungsenden (6, 7) ein freies Ende des Unterteils (22) bildet, wobei mindestens eines von Oberteil (21) und Unterteil (22) an seiner Außenseite eine vorstehende Kontaktkralle (24) aufweist.

2. Befestigungsanordnung nach Anspruch 1, bei der die Aufnahme (8) im Wesentlichen U-förmig und an das erste oder das zweite Betätigungsende (6, 7) angeformt ist.

3. Befestigungsanordnung nach Anspruch 1 oder 2, bei der die Aufnahme (8) zwischen dem ersten oder dem zweiten Betätigungsende (6, 7) und der Gewindemutter (5) angeordnet ist.

4. Befestigungsanordnung nach einem der vorangegangenen Ansprüche, bei der die Spange (4) ein Blechformteil und die Aufnahme (8) eine U-förmige Blechumkantung ist.

5. Befestigungsanordnung nach einem der vorangegangenen Ansprüche, bei der die Aufnahme (8) unter einem Abstand zueinander angeordnete Begrenzungswände (9) aufweist, von denen eine erste in der Verriegelungsposition einer Innenseite der Kante (2.1) des Durchbruchs (2) vorgelagert ist, und von denen eine zweite in der Verriegelungsposition einer der Innenseite gegenüber liegende Außenseite der Kante (2.1) des Durchbruchs (2) vorgelagert ist.

6. Befestigungsanordnung nach einem der vorangegangenen Ansprüche, bei der mindestens eines der Betätigungsenden (6, 7) in einem Abschnitt (10), mit dem das Betätigungsende (6, 7) durch den Durchbruch (2) hindurch tritt, eine Abmessung in Längsrichtung der in der Aufnahme (8) aufgenommenen Kante (2.1) aufweist, die im Wesentlichen einer Länge der Kante (2.1) in der Längsrichtung entspricht.

7. Befestigungsanordnung nach einem der vorangegangenen Ansprüche, bei der in einer Freigabeposition der Betätigungsenden (6, 7) zueinander, in der die Betätigungsenden (6, 7) gegenüber der Verriegelungsposition zueinander verlagert sind, die Kante (2.1) des Durchbruchs (2) mit der Aufnahme (8) der Spange (4) außer Eingriff steht.

8. Befestigungsanordnung nach einem der vorangegangenen Ansprüche, bei der die Betätigungsenden (6, 7) jeweils ein Griffstück (11) aufweisen, die unter einem Abstand zueinander durch den Durchbruch (2) über eine Außenseite (12) der Profilstrebe (1) hervorstehen und die entgegen einer mechanischen Vorspannung der Spange (4) von der Verriegelungsposition in eine Freigabeposition überführt werden können.

9. Befestigungsanordnung nach einem der Ansprüche 1 bis 7, bei der die Betätigungsenden (6, 7) überlappend einer den Durchbruch (2) aufweisenden Profilseite (13) der Profilstrebe (1) vorgelagert sind und fluchtende Werkzeugdurchlässe (14) aufweisen.

10. Befestigungsanordnung nach Anspruch 9, bei der die fluchtenden Werkzeugdurchlässe (14) eine Werkzeugeinstecköffnung (15) bilden, die von einer ersten Begrenzungskante (16) eines ersten der Werkzeugdurchlässe (14) und gegenüber liegend von einer zweiten Begrenzungskante (17) eines zweiten der Werkzeugdurchlässe (14) abgegrenzt ist.

11. Befestigungsanordnung nach Anspruch 10, bei der zumindest einer der fluchtenden Werkzeugdurchlässe (14) an einer dritten Begrenzungskante (18), die sich in Richtung einer Verstellrichtung zwischen der Verriegelungsposition und der Freigabeposition der Betätigungsenden (6, 7) erstreckt, eine Zahnung eines Zahnstangenantriebs aufweist.

12. Befestigungsanordnung nach Anspruch 11, bei der eine der dritten Begrenzungskante (18) gegenüberliegende vierte Begrenzungskante (19) unter einem Abstand zu der dritten Begrenzungskante (18) angeordnet ist und ein Gegenlager für einen Zahnantrieb (20), insbesondere für einen Schraubendreher mit Vielrundformantrieb bildet.

13. Befestigungsanordnung nach Anspruch 11 oder 12, bei der der andere Werkzeugdurchlass (14) der fluchtenden Werkzeugdurchlässe (14) kreisrund ausgeführt ist und einen Innendurchmesser aufweist, der im Wesentlichen einem Außendurchmesser eines Zahnantriebs (20), insbesondere eines Vielrundformantriebs eines Schraubendrehers entspricht.

14. Schaltschrankgehäuse mit einer Befestigungsanordnung nach einem der vorangegangenen Ansprüche, wobei die Profilstrebe (1) entweder eine Profilstrebe (1) eines Rahmengestells des Schaltschrankgehäuses oder eine Ausbaukomponente (26) für den Innenausbau des Schaltschrankgehäuses ist, insbesondere ein Montagechassis.

## Claims

1. A fastening arrangement having a profiled strut (1) and an insert nut (3) mounted in an aperture (2) in the profiled strut (1), the insert nut (3) having a threaded nut (5) held on a clip (4), **characterized in that** the clip (4) has a first and a second actuating end (6, 7), via which the insert nut (3) projects out of the aperture (2), an edge (2.1) of the aperture (2) is received in a receptacle (8) of the clip (4), the fastening arrangement having an upper part (21) and a lower part (22) which are connected to one another at a distance from one another via a connecting portion (23), a first of the actuating ends (6, 7) forming a free end of the upper part (21) and a second of the actuating ends (6, 7) forming a free end of the lower part (22), wherein at least one of the upper part (21) and the lower part (22) has a projecting contact claw (24) on its outer side.

2. The fastening arrangement according to claim 1, wherein the receptacle (8) is substantially U-shaped and is formed on the first or the second actuating end (6, 7).

3. The fastening arrangement according to claim 1 or 2, wherein the receptacle (8) is arranged between the first or the second actuating end (6, 7) and the threaded nut (5).

4. The fastening arrangement according to any one of the preceding claims, in which the clip (4) is a sheet-metal moulding and the receptacle (8) is a U-shaped sheet-metal bend.

5. The fastening arrangement according to one of the preceding claims, in which the receptacle (8) has boundary walls (9) arranged at a distance from one another, a first one of which, in the locking position, is located in front of an inner side of the edge (2.1) of the aperture (2), and a second one of which, in the locking position, is located in front of an outer side, opposite the inner side, of the edge (2.1) of the aperture (2).

6. The fastening arrangement according to any one of the preceding claims, in which at least one of the actuating ends (6, 7) has, in a portion (10) with which the actuating end (6, 7) passes through the aperture (2), a dimension in the longitudinal direction of the edge (2.1) accommodated in the receptacle (8) which substantially corresponds to a length of the edge (2.1) in the longitudinal direction.

7. The fastening arrangement according to any one of the preceding claims, in which, in a release position of the actuating ends (6, 7) relative to one another, in which the actuating ends (6, 7) are displaced relative to one another with respect to the locking position, the edge (2.1) of the aperture (2) is disengaged from the receptacle (8) of the clip (4).

8. The fastening arrangement according to one of the preceding claims, in which the actuating ends (6, 7) each have a grip piece (11) which protrude at a distance from one another through the aperture (2) beyond an outer side (12) of the profiled strut (1) and which can be transferred from the locking position into a release position counter to a mechanical prestressing of the clip (4).

9. The fastening arrangement according to any one of claims 1 to 7, in which the actuating ends (6, 7) are mounted in an overlapping manner in front of a profile side (13) of the profile strut (1) having the aperture (2) and have aligned tool passages (14).

10. The fastening arrangement according to claim 9, wherein the aligned tool passages (14) form a tool insertion opening (15) delimited by a first boundary edge (16) of a first one of the tool passages (14) and opposite thereto by a second boundary edge (17) of a second one of the tool passages (14).

11. The fastening arrangement according to claim 10, wherein at least one of the aligned tool passages (14) has a toothing of a rack and pinion drive at a third boundary edge (18) extending in the direction of an adjustment direction between the locking position and the release position of the actuating ends (6, 7).

12. The fastening arrangement according to claim 11, in which a fourth boundary edge (19) opposite the third boundary edge (18) is arranged at a distance from the third boundary edge (18) and forms an abutment for a toothed drive (20), in particular for a screwdriver with a multi-round-form drive.

13. The fastening arrangement according to claim 11 or 12, wherein the other tool passage (14) of the aligned tool passages (14) is circular and has an inner diameter substantially corresponding to an outer diameter of a toothed drive (20), in particular of a multi-round-form drive of a screwdriver.

14. A switch cabinet housing with a fastening arrangement according to one of the preceding claims, wherein the profile strut (1) is either a profile strut (1) of a frame of the switch cabinet housing or a extension component (26) for the interior fitting of the switch cabinet housing, in particular a mounting chassis.

## Revendications

1. Dispositif de fixation avec un élément profilé (1) et avec un écrou d'emboîtement (3) monté dans une percée (2) de l'élément profilé (1), dans lequel l'écrou d'emboîtement (3) comprend un écrou fileté (5) maintenu sur une agrafe (4), **caractérisé en ce que** l'agrafe (4) comprend une première et une deuxième extrémités d'actionnement (6, 7) par l'intermédiaire desquelles l'écrou d'emboîtement (3) dépasse hors de la percée (2), dans lequel, dans une position de verrouillage des extrémités d'actionnement (6, 7) entre elles, une arête (2.1) de la percée (2) est logée dans un logement (8) de l'agrafe (4), dans lequel le dispositif de fixation comprend une partie supérieure (21) et une partie inférieure (22), qui sont reliées entre elles de manière distante entre elles par l'intermédiaire d'une portion de liaison (23), dans lequel une première des extrémités d'actionnement (6, 7) forme une extrémité libre de la partie supérieure (21) et une deuxième des extrémités d'actionnement (6, 7) forme une extrémité libre de la partie inférieure (22), dans lequel au moins une parmi la partie supérieure (21) et la partie inférieure (22) comprend, sur son côté externe, une griffe de contact en saillie (24).

2. Dispositif de fixation selon la revendication 1, dans lequel le logement (8) présente globalement la forme d'un U et est formé au niveau de la première ou de la deuxième extrémité d'actionnement (6, 7).

3. Dispositif de fixation selon la revendication 1 ou 2, dans lequel le logement (8) est disposé entre la première ou la deuxième extrémité d'actionnement (6, 7) et l'écrou fileté (5).

4. Dispositif de fixation selon l'une des revendications précédentes, dans lequel l'agrafe (4) est une pièce en tôle façonnée et le logement (8) est un pliage en tôle en forme de U.

5. Dispositif de fixation selon l'une des revendications précédentes, dans lequel le logement (8) comprend des parois de limitation (9) distantes entre elles, dont une première est disposée, dans la position de verrouillage, en amont d'un côté interne de l'arête (2.1) de la percée (2) et dont une deuxième est disposée, dans la position de verrouillage, en amont d'un côté externe opposé au côté interne de l'arête (2.1) de la percée (2).

6. Dispositif de fixation selon l'une des revendications précédentes, dans lequel au moins une des extrémités d'actionnement (6, 7) présente, dans une portion (10) avec laquelle l'extrémité d'actionnement (6, 7) traverse la percée (2), une dimension dans la direction longitudinale de l'arête (2.1) logée dans le logement (8), qui correspond globalement à une longueur de l'arête (2.1) dans la direction longitudinale.

7. Dispositif de fixation selon l'une des revendications précédentes, dans lequel, dans une position de déverrouillage des extrémités d'actionnement (6, 7) entre elles, dans laquelle les extrémités d'actionnement (6, 7) sont déplacées par rapport à la position de verrouillage, l'arête (2.1) de la percée (2) est déboîtée du logement (8) de l'agrafe (4).

8. Dispositif de fixation selon l'une des revendications précédentes, dans lequel les extrémités d'actionnement (6, 7) comprennent chacune un élément de préhension (11) qui dépassent, de manière distante entre elles, à travers la percée (2) par un côté externe (12) de l'élément profilé (1) et qui peuvent être passés de la position de verrouillage vers une position de déverrouillage à l'encontre d'une précontrainte mécanique de l'agrafe (4).

9. Dispositif de fixation selon l'une des revendications 1 à 7, dans lequel les extrémités d'actionnement (6, 7) sont disposées en amont de manière superposée à un côté profilé (13) de l'élément profilé (1) comprenant la percée (2) et présentent des passages d'outils alignés (14).

10. Dispositif de fixation selon la revendication 9, dans lequel les passages d'outils alignés (14) forment une ouverture d'insertion d'outil (15) qui est délimitée par une première arête de limitation (16) d'un premier des passages d'outils (14) et, en face, par une deuxième arête de limitation (17) d'un deuxième des passages d'outils (14).

11. Dispositif de fixation selon la revendication 10, dans lequel au moins un des passages d'outils alignés (14) présente, au niveau d'une troisième arête de limitation (18), qui s'étend en direction d'une direction de déplacement entre la position de verrouillage et la position de déverrouillage des extrémités d'actionnement (6, 7), une denture d'un entraînement à crémaillère.

12. Dispositif de fixation selon la revendication 11, dans lequel une quatrième arête de limitation (19), opposée à la troisième arête de limitation (18), est disposée de manière distante par rapport à la troisième arête de limitation (18) et forme un contre-palier pour un entraînement denté (20), plus particulièrement pour un tournevis avec entraînement à formes rondes multiples.

13. Dispositif de fixation selon la revendication 11 ou 12, dans lequel l'autre passage d'outil (14) des passages d'outils alignés (14) présente une forme circulaire et présente un diamètre intérieur qui correspond globalement à un diamètre extérieur d'un entraînement denté (20), plus particulièrement d'un entraînement à formes rondes multiples d'un tournevis.

14. Boîtier d'armoire de commande avec un dispositif de fixation selon l'une des revendications précédentes, dans lequel l'élément profilé (1) est soit un élément profilé (1) d'un châssis du boîtier d'armoire de commande soit un composant d'extension (26) pour l'aménagement interne du boîtier d'armoire de commande, plus particulièrement un châssis de montage.
